# EUROPEAN PATENT APPLICATION

(11) **EP 4 289 786 A2**
(43) Date of publication of application: **13.12.2023**
(21) Application number: 23167623.0
(22) Date of filing: 12.04.2023
(51) Int. Cl.: C01B 32/15, C01B 32/17, C01B 32/162

(54) **A REAGENT SOLUTION FOR PURIFICATION OF CARBON NANOMATERIALS AND A METHOD THEREOF**

(30) Priority: 06.06.2022 IN 202221032397
(71) Applicant: Indian Oil Corporation Limited, 400 051 Mumbai Bandra (East) (IN)
(72) Inventor: SESHUBABU, Narayanam, 121007 Faridabad (IN); KUMAR, Sagar Pal, 121007 Faridabad (IN); SAMALA, Bhanumurthy, 121007 Faridabad (IN); MOHANASUNDARAM, Palvannan, 121007 Faridabad (IN); IRUDAYARAJ, Devotta, 121007 Faridabad (IN); RAMAKUMAR, Sankara Sri Venkata, 121007 Faridabad (IN)
(74) Representative: Turner, Craig Robert

(57) **Abstract**

The present invention relates to an environmentally benign, non-mineral, acid-based reagent solution. The reagent solution comprises a solid reagent selected from sodium persulphate or potassium persulphate or ammonium persulphate, wherein the solid reagent is dissolved in deionized water. The reagent solution enables removal of the metals present in the carbon nanomaterials without perturbing the structural integrity of carbon nanomaterials. The purification methodology disclosed in the present invention is suitable to use in energy storage, composite polymers, electromagnetic interference (EMI) shielding materials, conductive inks, conductive paints, field emission transistors, etc.

## Description

### FIELD OF THE INVENTION:

The present invention relates to a method for removal of catalytic metals that are embedded with carbon nanomaterials with or without heteroatoms by employing an environmentally benign, non-mineral acid-based reagent solution. More particularly, the present invention provides a solid reagent comprising sodium or ammonium or potassium salt of persulphate.

### BACKGROUND OF THE INVENTION:

Carbon nanomaterials (CNMs) comprise single walled carbon nanomaterials, double walled carbon nanomaterials, multi walled carbon nanomaterials, carbon nanofibers, carbon nano rings, etc. Among these, carbon nanotubes (CNTs) are single or multi layered graphene structures rolled up into seamless cylinders with varying degree of length and diameter. The CNTs have exceptional thermal, electrical, and mechanical properties by virtue of their structure and tube chirality. These properties are greatly influenced by presence of residual metal impurities present in the CNTs. To take full advantage of the CNT properties for various electrical, thermal, and mechanical applications, purification of CNT becomes inevitable to attain the maximum purity.

The process of metal impurity removal from CNMs is traditionally conducted using strong mineral-acid based liquid reagents such as HCl, HNO₃, H₂SO₄, and HF. In addition, vacuum annealing process also being used to achieve high purity CNMs.

In the prior art, the combination of ammonium persulphate along with ammonia solution is used for leaching of precious metals such as copper (Cu), silver (Ag) & gold (Au) from electronic printed circuit board (PCB) components. The leaching process is selectively removing precious metals which are standalone in nature without having any chemical bond with carbon. However, the current approach is exclusive in nature wherein CNMs are associated with multi- valent metals characterized with plural combinations of metal oxides of iron (Fe), cobalt (Co), nickel (Ni), magnesium (Mg), aluminum (Al), etc. These metal impurities are strongly embedded with carbon atoms in metal-carbide form. Therefore, removal of all these metal oxides that are embedded with CNMs using the said reagent solution in a single step is not yet disclosed in the prior arts, especially by employing the said process conditions as described in the present invention. Furthermore, along with said solid reagent, any type of acid or base has not been used.

The process of CNT production involves decomposition of hydrocarbon feedstock (with or without heteroatoms such as nitrogen, oxygen, sulfur) over the catalyst substrate at elevated temperature in the range of 500-1000°C, at atmospheric pressure or elevated pressure depending on the intended CNT structure. In this method of CNT production, catalyst substrate acts as a nucleating agent of CNT growth and follows either tip or base growth mechanism according to tuned process conditions and type of catalyst. The resulting CNT growth emanated from the catalyst particles which are invariably associated with CNT structure.

The catalyst substrate is a combination of two or three metals with suitable carrier material. The metals present in the catalyst facilitates the CNT growth during the CNT production process, as a result metal particles of the catalyst remain intact at the tip or base of the CNT tube. For instance, if CNT growth follows a base growth mechanism, then metal particles lie at the base of the tube, while the tip growth mechanism yields CNT associated with metals at its tip. Thus produced CNT is invariably associated with catalyst metal impurities. Further, different process methods yield CNT with purity grade ranging from 70 to 99 wt.% depending on the type of the catalyst used and depending on the structural requirement of CNT for intended applications. However, for using CNT in electrical/electronic/polymer/metal composite, conductive inks, etc. applications, it often requires high purity CNT i.e., >99.5%, which is an intriguing challenge to achieve without damaging the structure of CNT.

Traditionally, the above said carbon nanomaterials or CNTs were purified by wet chemical method or hot vacuum evaporation of metals at a very high temperature that is near the boiling temperature of metals, which is very cumbersome and energy intensive. Wet chemical method uses corrosive acids with high concentration for removal of metal impurities, however acid treatment invariably creates more structural defects and introduces unwanted oxygen functional groups along with extraneous carbonaceous substance due to structural collapse of some CNTs, as a result structural integrity of purified CNT is compromised.

There are numerous reports outlined in the prior art with different purification strategies including physical, chemical, and thermal treatments. The physical treatment namely ultra-centrifugation liquid dispersed CNT has been reported, by which the catalyst impurities would not be removed effectively as these particles are strongly adhered to the carbon structure (Bandow et al., J. Phys. Chem. B, 1997, 101, 8839-8842).

However, separation of assorted CNT takes place according to density gradient. On the other hand, thermal treatment involves the heat treatment of CNT in the residual air atmosphere at temperature about 400 to 450°C for possibility of removal of catalyst impurity, however this can accelerate the combustion of CNT by catalytic effect of intrinsic catalyst particles at treating temperature [e.g., Chiang et al., J. Phys. Chem. B 2001, 105, 1157-1161*;* Chiang et al., J. Phys. Chem. B 2001, 105, 8297-8301*].*

Chemical oxidation is also being adopted to purify CNT employing various acids namely nitric acid, or hydrogen peroxide either alone or in combination with some metal to generate in-situ hydroxyl radicals. In this method, the residual catalyst particles get reacted with acids and form corresponding nitrates or hydroxides, subsequently dissolved in water solution. These aggressive processes typically result in severe damage to, and loss of CNTs. Additionally, the processes are often limited to small batch yields, low yields, and/or low purity. Consequently, an efficient industrial scale purification process to remove these impurities is essential, as many of the applications of CNTs require highly purified CNTs.

US5641466 discloses a process in which impure carbon materials are separated from carbon nanomaterials by pulverization and heating in the presence of an oxidizing agent at a temperature in the range from 600 to 1000°C. This method eliminates impure carbon materials that are oxidized and liberated into gas. Thus, nanotubes remain unoxidized, however the method compromises on the physical characteristics of resulting CNT such as some length from the tube tips.

CN1436722A discloses purification technology through vacuum high temperature process for coarse carbon nanotube product containing metal catalyst and metal oxide carrier. By this process, metal oxide and support carriers are eliminated effectively. The purification process involves treating the 86% carbon content of CNT sample at high temperature of 2300°C for 5 hours to reach purity up to 99.93% under high vacuum.

EP1061040A1 discloses a method consisting of two wet purification steps and one dry purification step, which are performed in sequence. The first wet purification involves treating of crude carbon nanotubes with acid solution followed by second wet purification step wherein the carbon nanotubes from the first wet purification process are purified using an acetone and acid solution. Drying step is carried out after the second step which involves gas purging to purify the carbon nanotube.

US7494639B2 patent describes the use of Fenton's reagent to remove the residual metal impurities in carbon nanotubes. The disclosure deals with the purification process by preparing an aqueous slurry of impure CNT material which is treated with Fenton's reagent to make catalytic slurry along with hydrogen peroxide, wherein the Fe²⁺ ions catalyze the production of hydroxyl radicals; and finally utilize the hydroxyl radicals in the oxidative slurry to purify the CNT material and provide purified CNTs.

US6683783B1 discloses a method for purifying a mixture comprising single-wall carbon nanotubes and amorphous carbon with heating under oxidizing conditions so that method is sufficient to remove the amorphous carbon, followed by recovering a product comprising at least about 80% by weight of single-wall carbon nanotubes.

US5698175A discloses a process for purifying carbon nanotubes using reagent selected from a group consisting of oxidation agents such as nitration agents and sulfonation agents in liquid phase, thus reacting the carbon nanotubes with the reagent to remove carbon impurities except carbon nanotubes.

US20150225243A1 describes a process for purifying carbon nanotubes containing transition metal nanoparticles and carbonaceous impurities by adding oxidizing solution to form a carbon nanotube slurry, and the slurry is heated at an elevated temperature of 110°C to vaporize at least a portion of the oxidizing agent. Acid is then added to the heated carbon nanotube slurry to dissolve transition metal particles.

US7868333B2 disclosed a process for de-metallization of carbon nanotubes for removing metal-based catalyst residues from carbon nanotubes by contacting with an active metal agent namely highly electropositive metals such as lithium, sodium, calcium, of its organic derivatives followed by further treatment in electron transport species and then treat with carbon monoxide.

CN1485271A discloses a method to remove Co, Ni and Fe in CNTs by treating in hydrogen atmosphere up to 650°C and then treated with CO gas at 150-200°C. Further sample is treated under high temperature vacuum evaporation of metals.

J. Phys. Chem. B, 2007, 111 (6), pp 1249-1252; discloses a process involving treatment of single walled CNT (SWCNT) sample with 35% impurities by reacting with an aqueous mixture of H₂O₂ and HCl at 40-70°C for 4-8 hours.

US8128901B2 discloses a method of removing metal impurities from carbon nanotubes, which includes treating carbon nanotubes with distilled bromine in a substantially moisture free inert atmosphere. After treatment, distilled bromine is removed from the carbon nanotubes, and by this method iron content from CNT is removed 2.5 to 3.5 by weight.

US20020159944A1 discloses a purification process that removes extraneous carbon from SWCNT and metal containing residual catalyst particles by oxidation, reduction, and reaction of a halogen-containing gas. The invention provides a scalable high-purity SWCNT.

Peng Liu *et al.* relates to a room temperature method for cutting of long and entangled multiwalled carbon nanotubes (MWCNTs) into short and dispersible pieces, by the combination of ultrasonic irradiation with ammonium persulfate (APS). In this, low concentrations of oxygen-containing groups had been introduced onto the surfaces of the MWCNTs after the ultrasonic irradiation in deionized water, without damaging the basic MWCNT structure.

Sergio Manzetti *et al.* relates to different methods of solubilization of carbon nanotubes. In one of the methods, a solution of potassium persulfate (9.6 mmol) in 45 mL of double-distilled H₂O is added to ethylene glycol solution and stirred at 130°C under nitrogen atmosphere for 6 h. 0.4 g of MWCNTs are then added to the solution and allowed to react for 24 h with rigorous stirring, generating the surface-coated polyelectrolytes of CNTs.

US7645497B2 relates to carboxylic acid functionalization of SWCNTs. In this method, raw (unfunctionalized) SWCNTs are added to a bath of aqueous composition of ammonium persulfate; and temperatures from 20-120°C are typically used in reflux of this mixture with appropriate agitation over 1 hour to several days process time; to obtain functionalized SWCNTs. After appropriate heating, the dried powder of functionalized SWCNT is obtained.

JP5228323B2 relates to a method for producing single-walled CNT. In this, single-walled carbon nanotubes are treated with HNO₃ for removal of metal impurities and improved dispersibility. A (NH₄)₂S₂O₈/H₂SO₄ solution was used as a cutting reagent wherein, 25 mg of HNO₃ -single-walled carbon nanotubes were pre-dispersed in 50 mL of 96% H₂SO₄ for 1 hour to homogenize the mixture. Next, 4 g of ammonia persulfate (NH₄)₂S₂O₈was added as an oxidant and the mixture was further sonicated at 35-40°C for 4, 8, 20, 30 hours. Finally, the obtained sample was dried at 120°C for 24 hours.

CN101164872B relates to a method for producing mono-layer carbon nano pipe. In this, mono-layer carbon nano pipe is treated with HNO₃ for removal of metal impurities. A (NH₄)₂S₂O₈/H₂SO₄ solution was used as a cutting reagent wherein, 25 mg of HNO₃ -single-walled carbon nanotubes were pre-dispersed in 50 mL of 96% H₂SO₄ for 1 hour to homogenize the mixture. Next, 4 g of ammonia persulfate (NH₄)₂S₂O₈ was added as an oxidant and the mixture was further sonicated at 35-40°C for 4, 8, 20, 30 hours. Finally, the obtained sample was dried at 120°C for 24 hours.

US9162894B2 relates to a method for producing graphene comprising (i) reacting graphite in an acid solution in which an oxidant is present at 40°C for 1 hour, (ii) washing the product obtained in step (i) with water to neutral and dried. The ratio of graphite: acid: oxidant: solvent is 1:0.1-50:0.1-50:0.1-100 by mass.

Ji-Tae Park *et al.* relates to a method for preparation of functionalized MWCNT. In this, pristine MWCNTs and DW were added to a flask and dispersed in an ultrasonic bath. Then, K₂S₂O₈ was added to the flask; flask was kept at 85°C after mixing for 2 hours and was then cooled down to room temperature. The contents of the flask were separated using a membrane filter and rinsed with DW and then MWCNT obtained was dried in a furnace. COOK functionalized group was added to the MWCNT.

Qing-Qing Ni *et al.* relates to a method to prepare water-soluble CNTs by the introduction of potassium carboxylate (-COOK) by mild oxidation process using potassium persulfate (KPS). In this, 40 mg pristine SWNTs and 50 ml deionized water were added to a flask; then 0.45 g KPS was added; flask was kept at 85°C with vigorous mixing for 3 hours, and then cooled down to room temperature naturally. The supernatant solution was collected and filtered and washed with distilled water. Finally, the products were dried overnight at 80°C.

US20200087149A1 relates to a method for synthesis of nanofluids. In this method, an aqueous mixture containing 0.01-0.1 wt.% of multi-walled carbon nanotubes was first ultrasonicated for 10 minutes and then, about 20 grams of KPS (potassium persulfate) and 10 grams of KOH (potassium hydroxide) were added to the solution and exposed to ultrasound waves for 10 minutes at ambient temperature. Then, the functionalized carbon nanotubes were separated by a filter and washed with distilled water. The amount of persulfate salt is in an amount of at least one of from about 5 to about 50%, from about 5 to about 20%, and from about 5 to about 10% by weight of water existing in the aqueous solution.

The prior arts indicate that, different array of methodologies is followed for purification of carbon nanomaterials that includes acid treatment, high temperature vacuum annealing process, treating the sample with various harsh chemical reagents, etc. The cited methods are associated with various impediments, for example, acid-based purification leads to generation of acid waste, hence disposal is concern, while in case of high temperature vacuum annealing process, very high energy is required, and is limited to small scale. In view of this, an alternative method of purification process is required to alleviate the problems associated with above mentioned methods.

### SUMMARY OF THE INVENTION:

The inventors of the present invention have found that a reagent selection is crucial to remove the metals that are encapsulated at the tip or base of the carbon nanomaterials or intercalated between the carbon nanomaterials by selective oxidation of metal while leaving the carbon nanomaterial structure unperturbed. The potassium persulphate or ammonium persulfate or sodium persulfate reagent solution of the present invention decomposes to give free radical persulfate species under reaction condition, and these species are responsible for removal of metals from the carbon nanomaterial, thus resulting in metal particles leaving the carbon nanomaterial and dissolving into solution by reacting with sulfate ion. Present invention deals with the non-acid based solid regent approach which comprises of ammonium or sodium or potassium salt of persulphate in appropriate molar ratio to the metal concentrations of carbon nanomaterial, which enable to purify carbon nanomaterials in aqueous solution at moderate process conditions. The same method can also be employed for demetallation of other type carbon materials including pet coke.

The present invention discloses a reagent solution for purifying carbon nanomaterials at ambient to moderate process conditions. The disclosed reagent solution comprises a solid reagent selected from potassium persulphate or ammonium persulphate or sodium persulphate, which will be dissolved in deionized water in the desired molar concentrations. The reagent solution has been used in the appropriate mole ratios to the metal impurities that are present in carbon nanomaterials, either equivalent to or in fractional ratio of 0.1 to 1. The molar ratio of reagent solution is selected based on concentration of the metal impurities present in carbon nanomaterials (CNMs).

The said reagent solution is mixed with pristine carbon nanomaterial of purity ranging from 85 to 97 wt.% to make slurry of carbon nanomaterial, which is then charged into a vessel fitted with a high torque stirrer for homogeneous mixing of the slurry. The slurry is kept under stirring either at room temperature or gradually heated to a temperature ranging from 70-100°C for a period of 4 to 12 hours. The pristine carbon nanomaterial bearing the catalytic metal impurities ranging from 3-15 wt.%, is subsequently treated with reagent solution to remove the residual metals embedded with carbon nanomaterial.

Accordingly, the present invention provides a non-mineral acid-based reagent solution for purification of a carbon nanomaterial, the solution comprising:
(a) a solid reagent selected from the group consisting of sodium persulphate, potassium persulphate, ammonium persulphate and a mixture thereof; and
(b) deionized water,
wherein the solid reagent is dissolved in the deionized water in a molar ratio of 0.01 to 1; and wherein the carbon nanomaterial comprises metal impurities.

In one of the features of the present invention, the solid reagent is a non-mineral and an acid-based solid reagent.

In another feature of the present invention, the carbon nanomaterial has a bulk density in a range of 0.01 to 0.2 g/cc.

In yet another feature of the present invention, the carbon nanomaterial is associated with a transitional metal in a form of a metal-carbide with or without heteroatoms, wherein the carbon nanomaterial is encapsulated or intercalated with a carrier metal oxide. The carbon nanomaterial is selected from the group consisting of a single walled carbon nanomaterial, a double walled carbon nanomaterial, a triple walled carbon nanomaterial, a thin walled carbon nanomaterial, a multi walled carbon nanomaterial, a carbon nanofiber, and a carbon nano ring.

The present invention also provides a process for purifying a carbon nanomaterial using a non-mineral acid-based reagent solution, the process comprising:
(a) mixing a solid reagent and deionized water in a molar ratio of 0.01 to 1 to form a reagent solution, wherein the solid reagent is selected from the group consisting of sodium persulphate, potassium persulphate, ammonium persulphate and a mixture thereof;
(b) mixing the reagent solution with the carbon nanomaterial to make a carbon nanomaterial slurry, wherein the carbon nanomaterial comprises metal impurities;
(c) heating the carbon nanomaterial slurry gradually from room temperature to a temperature of 40-100°C;
(d) filtering the carbon nanomaterial slurry under vacuum followed by washing with deionized water to obtain a purified carbon nanomaterial cake; and
(e) drying the purified carbon nanomaterial cake to obtain a purified carbon nanomaterial with a purity of more than 99 wt.%.

In one of the features of the present invention, the carbon nanomaterial slurry is heated for a period of 4-12 hours with stirring.

In another feature of the present invention, the carbon nanomaterial slurry is heated at temperature in a range of 70-100°C. In one of the preferred features, the carbon nanomaterial slurry is heated at temperature in a range of 40 to 90°C.

In yet another feature of the present invention, the carbon nanomaterial slurry is heated at a temperature of 70°C for 12 hours.

In yet another feature of the present invention, the purified carbon nanomaterial cake is dried in a hot air oven at 120°C for 12 hours.

In yet another feature of the present invention, the carbon nanomaterial is associated with a transitional metal in a form of metal-carbide with or without heteroatoms, wherein the carbon nanomaterial is encapsulated or intercalated with carrier metal oxide.

In yet another feature of the present invention, the carbon nanomaterial is a pristine carbon nanomaterial. In still another feature of the present invention, a concentration of the reagent solution is in a range from 1-50 wt.% with respect to a weight of the pristine carbon nanomaterial. In still another feature of the present invention, the pristine carbon nanomaterial comprises metal impurities in a range of 3-15 wt.%.

In yet another feature of the present invention, the metal impurities are in monometallic, bimetallic, trimetallic, or multimetallic form, and wherein the metal impurities comprise iron, cobalt, nickel, manganese, molybdenum, metals dispersed on carrier materials, whereas the carrier materials comprise magnesium oxide, alumina, silica, or combination thereof.

In yet another feature of the present invention, the purity of the pristine carbon nanomaterial is in a range from 85 to 97 wt.%.

In yet another feature of the present invention, a ratio of the reagent solution to the metal impurities in the pristine carbon nanomaterial is in a range from 0.1 to 1.

In yet another feature of the present invention, the purified carbon nanomaterial has purity of more than 99-99.5 wt.%.

In yet another feature of the process for purifying the carbon nanomaterial provided by the present invention, the reagent solution generates persulfate radical formed *in-situ*, and the generated persulphate radical reacts with the metal impurities that are embedded within the carbon nanomaterials.

### OBJECTIVES OF THE INVENTION:

The primary objective of the invention is to provide a reagent solution for purification of carbon nanomaterials with or without heteroatoms bearing catalytic metal impurities. The reagent solution comprises a solid reagent dissolved in deionized water in a molar ratio of 0.01 to 1.

It is another objective of the present invention to provide a process for purification of carbon nanomaterials using the reagent solution.

It is another objective of the present invention is to remove the multivalent catalytic metals embedded with CNMs using non-functionalized and non-destructive methodology.

### ABBREVIATIONS:

CNT: carbon nanotubes
CNM: carbon nanomaterial
MWCNT: multiwalled carbon nanotubes
APS: ammonium persulfate
SWCNT: single walled carbon nanotubes
KPS: potassium persulfate
TGA: Thermogravimetric Analysis
ICP-AES: Inductive coupled Plasma-Atomic emission spectroscopy
HiPCO: high-pressure carbon monoxide
CSTR: continuous stirring temperature reactor
ANFD: agitated nutsche filter/dryer reactor
TEM: Transmission Electron Microscopy

### BRIEF DESCRIPTION OF THE DRAWINGS:

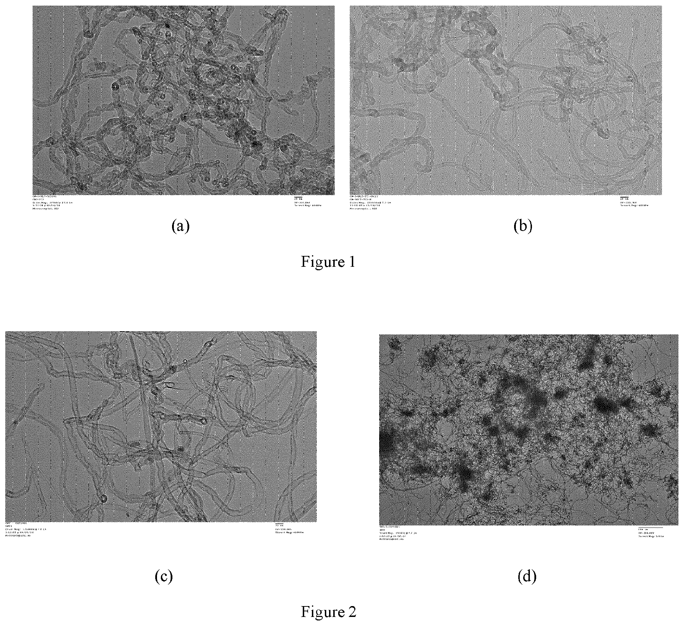

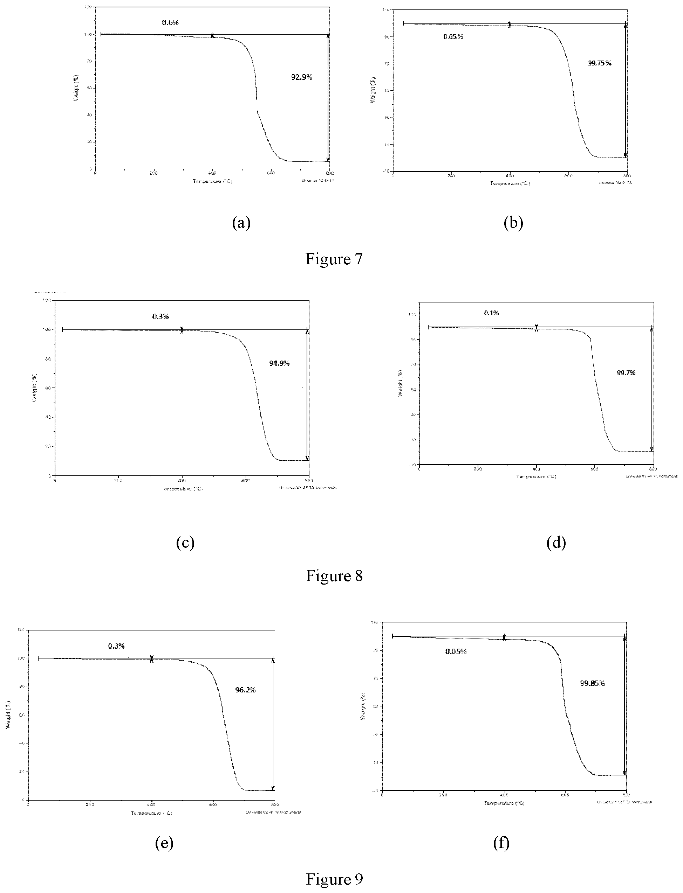

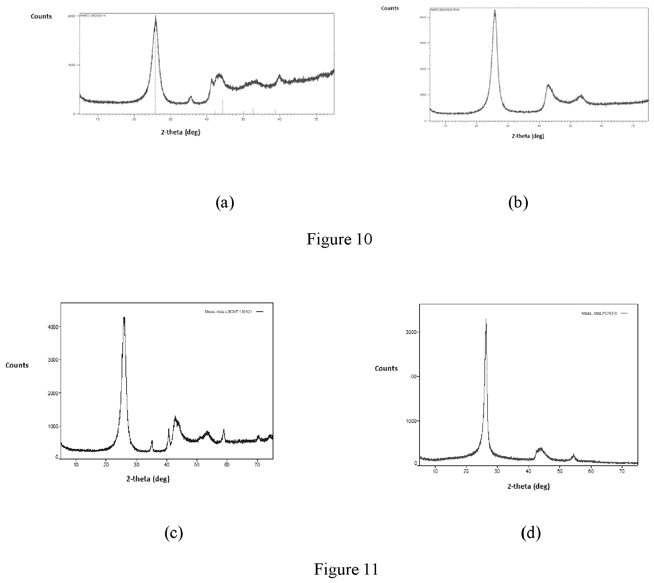

(A) TEM images
   Figure 1 discloses TEM image of (a) CNT of example 2, unpurified (b) CNT of example 3, purified.
   Figure 2 discloses TEM images of (c) CNT of example 4, unpurified (d) CNT of example 5, purified.

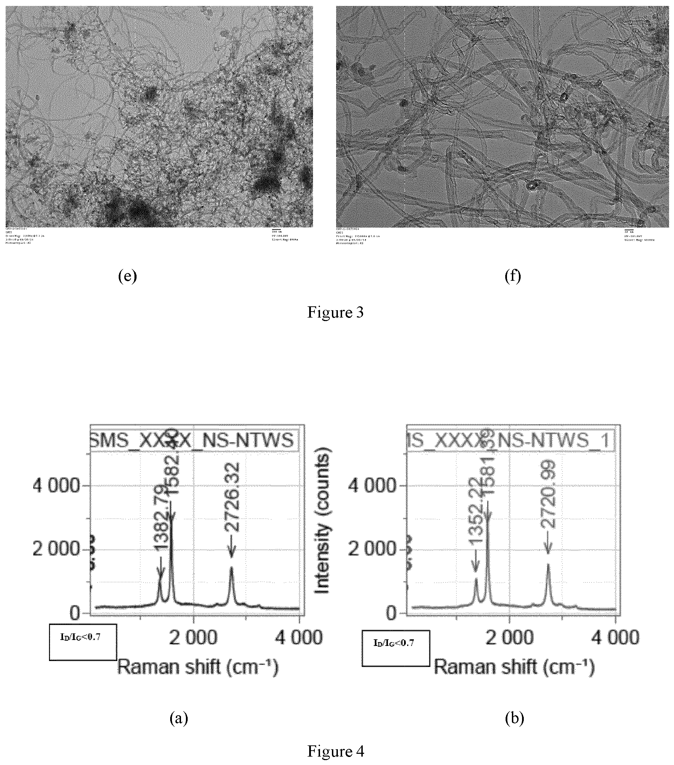

   Figure 3 discloses TEM images of (e) CNT of example 6, unpurified (f) CNT of example 7, purified.
(B) Raman Spectra images
   Figure 4 discloses Raman Spectrum of (a) CNT of example 2, unpurified (b) CNT of example 3, purified.

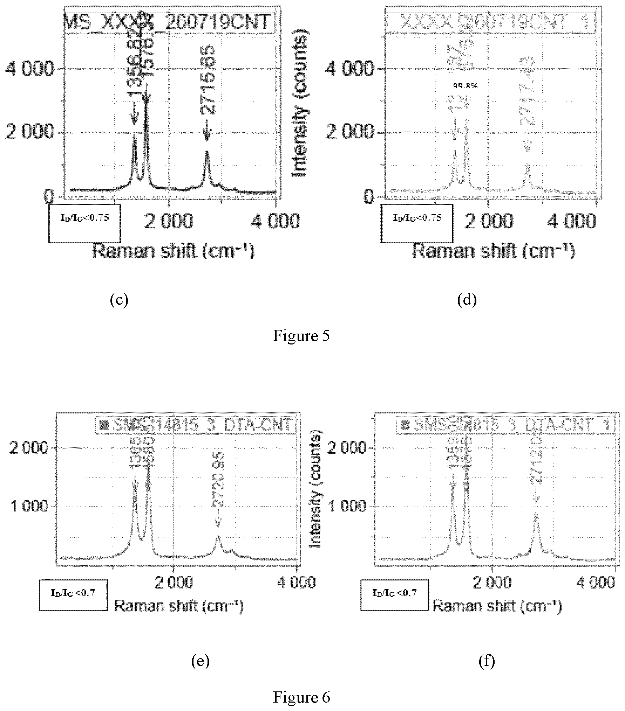

   Figure 5 discloses Raman Spectrum of (c) CNT of example 4, unpurified (d) CNT of example 5, purified.
   Figure 6 discloses Raman Spectrum of (e) CNT of example 6, unpurified (f) CNT of example 7, purified.
(C) Thermogravimetric Analysis (TGA) images
   Figure 7 discloses TGA curve of (a) CNT of example 2, unpurified (b) CNT of example 3, purified.
   Figure 8 discloses TGA curve of (c) CNT of sample 2, unpurified (d) CNT of Sample 3, purified Figure 9 discloses TGA curves of (e) CNT sample of example 6, unpurified (f) CNT sample of example 7, purified.
(D) XRD images
   Figure 10 discloses XRD images of (a) CNT of sample 2, unpurified (b) CNT of sample 3, purified.
   Figure 11 discloses XRD images of (c) CNT sample of example 4, unpurified (d) CNT sample of example 5, purified.

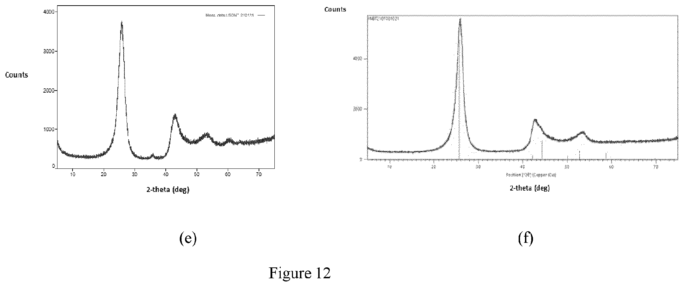

   Figure 12 discloses XRD images of (e) CNT sample of example 4, unpurified (f) CNT sample of example 5, purified.

### DETAILED DESCRIPTION OF THE INVENTION

Those skilled in the art will be aware that the present disclosure is subject to variations and modifications other than those specifically described. It is to be understood that the present disclosure includes all such variations and modifications. The disclosure also includes all such steps of the process, features of the system, referred to or indicated in this specification, individually or collectively and all combinations of any or more of such steps or features.

### Definitions

For convenience, before further description of the present disclosure, certain terms employed in the specification, and examples are collected here. These definitions should be read in the light of the remainder of the disclosure and understood as by a person of skill in the art. The terms used herein have their meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only".

Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

Unless defined otherwise, all technical and scientific terms used herein have the same meaning as commonly understood by one of ordinary skill in the art to which this disclosure belongs. Although any methods and materials similar or equivalent to those described herein can be used in the practice or testing of the disclosure, the preferred methods, and materials are now described. All publications mentioned herein are incorporated herein by reference.

The present disclosure is not to be limited in scope by the specific embodiments described herein, which are intended for the purposes of exemplification only. Functionally equivalent products and processes are clearly within the scope of the disclosure, as described herein.

The present invention discloses a reagent solution for purifying carbon nanomaterials at ambient to moderate process conditions. The disclosed reagent solution comprises a solid reagent selected from potassium persulphate or ammonium persulphate or sodium persulphate, which will be dissolved in deionized water in the desired molar concentrations. The reagent solution has been used in the appropriate mole ratios to the metal impurities present in carbon nanomaterials (CNMs), either equivalent or in fractional ratio of 0.1 to 1. The molar ratio of reagent solution selected is based on initial metal impurities present in carbon nanomaterials. The said carbon nanomaterials are characterized with a bulk density in a range of 0.01 to 0.2 g/cc. Also, the carbon nanomaterials, with or without heteroatoms, are associated with transitional metals in a form of metal-carbides, encapsulated or intercalated along with carrier metal oxides.

In another embodiment, the reagent solution for purification of carbon nanomaterials comprises - (a) a solid reagent selected from a group consisting of sodium persulphate, potassium persulphate, ammonium persulphate and mixture thereof; and (b) deionized water, wherein the solid reagent is dissolved in the deionized water in a molar ratio of 0.01 to 1. This molar ratio of reagents varies from 0.01 molar to 1 molar depending on initial purity of carbon nanomaterials. Also, the solid reagent is a non-mineral and acid-based solid reagent.

In another embodiment, the carbon nanomaterial derived from various supported catalysts consisting of iron, cobalt & nickel, manganese, magnesium has been chosen to purify using the aforementioned reagent solution under stipulated purification process conditions. The said reagent generates persulfate radical formed *in-situ* under the process condition, wherein the said generated persulphate radical reacts with metal impurities that are embedded within the carbon nanomaterials. After the purification treatment for stipulated time, carbon nanomaterial slurry is filtered under vacuum followed by washing with deionized water. The resulting purified carbon nanomaterial cake is dried in a hot air oven at 120°C for 12 hours to remove the excess moisture from carbon nanomaterial. The oven dried carbon nanomaterial is further characterized using Thermogravimetric analysis (TGA) & Inductive coupled Plasma-Atomic emission spectroscopy (ICP-AES) techniques to monitor the residual metal content and metal concentrations in carbon nanomaterials.

In yet another embodiment, the process for purification of carbon nanomaterials comprises:
(a) mixing a reagent solution with a pristine carbon nanomaterial which is produced by catalytic chemical vapour deposition process using hydrocarbon feedstock to make a carbon nanomaterial slurry;
(b) heating the carbon nanomaterial slurry gradually from room temperature to a temperature of 70-100°C for a period of 4-12 hours, while stirring;
(c) filtering the carbon nanomaterial slurry under vacuum followed by washing with deionized water to obtain a purified carbon nanomaterial cake; and
(d) drying the purified carbon nanomaterial cake in a hot air oven at 120°C for 12 hours to obtain carbon nanomaterial with a purity of more than 99-99.5 wt.%.

In yet another embodiment, the disclosed purification method provides carbon nanomaterial with purity of >99-99.5 wt.% without compromising structural integrity of carbon nanomaterial. The structural integrity of carbon nanomaterials is evident by laser Raman Spectroscopy, wherein intensity of carbon bands corresponds to Sp³ to Sp² akin to purified pristine carbon nanomaterial. The current method of purification of carbon nanomaterial eliminates the need of corrosive and concentrated acid solutions thereby structural damage of carbon nanomaterials does not take place.

One of the embodiments states that, reagent solution is either one or combination of the reagents such as ammonium persulfate (APS) or potassium persulfate (KPS) or sodium persulfate dissolved in deionized water.

In another embodiment, different molar concentrations of reagent solution are prepared in a vessel and stored in an airtight container. 1 to 100 wt.% of 0.01 molar to 1 molar reagent solution, preferably 1 to 50 wt.%, and more preferably 1 to 30 wt.% of 1 molar reagent solution has been used for treating pristine carbon nanomaterial to remove the encapsulated/embedded and excess metal impurities from the carbon nanomaterials.

In another embodiment, said carbon nanomaterials are derived from gaseous or liquid hydrocarbon feedstock bearing carbon number C1 to C30 in the presence of catalyst substrates at elevated temperatures in a suitable reactor configuration. The carbon nanomaterials are obtained by different process ranging from catalytic chemical vapor deposition in different type of reactors including horizontal, vertical tubular reactors with incipient fluidization, continuous fluidization, fixed bed or floating catalyst reactor, high-pressure carbon monoxide (HiPCO) process reactor.

In another embodiment, the said carbon nanomaterial comprises metal impurities, either in monometallic or bimetallic or trimetallic or multimetallic form, comprises iron, cobalt, nickel, manganese, molybdenum, metals dispersed on carrier materials such as magnesium oxide, alumina, silica, or combination thereof.

In another embodiment, carbon nanomaterials are produced from fluidization process, preferably using liquid or gaseous hydrocarbon feed stock in presence of catalyst, wherein catalyst is preferably selected from iron-manganese supported on magnesia, nickel-manganese supported on magnesia or cobalt-manganese supported on magnesia.

In another embodiment, the carbon nanomaterials comprise carbon nanotubes selected from a group consisting of single walled or double walled or triple walled carbon nanomaterials, multi walled carbon nanomaterials, carbon nanofibers, carbon nano rings, etc. The produced carbon nanomaterials having characteristics of tubular structures having variable diameter ranging from 1 to 100 nm, and tube length ranging from 1 to 50 µm, bulk density of 0.01 to 0.25 gram/cc and bearing metal content ranging from 0.1 to 15 wt.%, preferably 0.1 to 10 wt.%.

In another embodiment, thus produced carbon nanotubes (CNT) is ball-milled to homogenize to fine power. Further, the CNT slurry is prepared by mixing the thus formed CNT powder bearing metal concentration of 0.01 to 15 wt.% with a reagent solution in a continuous stirring temperature reactor (CSTR) or agitated nutsche filter/dryer reactor (ANFD). The CNT slurry mixed with reagent solution in ANFD, which is allowed to stir at temperature in the range of room temperature to 100°C, more preferably 40 to 70°C for 4-12 hours. The treated CNT slurry is subjected to vacuum to remove the excess water solution followed by washing with de-ionized water. Thus, obtained filtrate cake is oven dried at 120°C for 6 to 12 hours.

In another embodiment, purified CNT is analysed by inductively coupled plasma-Optical emission spectroscopy (ICP-OES), Thermogravimetric Analysis (TGA), Raman spectroscopy, Transmission Electron Microscopy (TEM), to monitor metal profiling, residual meal content, structural defects, and structural morphology, respectively.

In another embodiment, after purification treatment of CNT with reagent, resulted purified CNT bearing carbon purity of 99.5 wt.% or higher with retention of structural integrity.

### EXAMPLES:

Having described the basic aspects of the present invention, the following non-limiting examples illustrate specific embodiments thereof. Those skilled in the art will appreciate that many modifications may be made in the invention without changing the essence of invention.

### Example 1: Preparation of reagent solution

228 grams of ammonium persulphate dissolved in 10 liters of deionized water under stirring condition, which is denoted as solution A. The prepared solutions are kept in different sealed containers that can be used as purification agent for CNT purification process to remove the metals in an appropriate concentration.

### Example 2: Process for production of carbon nanotubes (CNTs) using Fe-Mn catalysts

100 gm of 20 wt.% Iron and 22 wt.% Manganese supported on MgO catalyst is loaded into the vertical fluidized bed reactor, and the reactor is then heated up to the temperature of 650°C under inert gas atmosphere. After achieving the desired temperature, hydrogen is passed over the catalyst along with nitrogen gas to reduce the metal oxide catalyst for 2 hours. After finishing the reduction step, hydrogen gas is turned off and nitrogen gas is being continuously passed over the catalyst. The petroleum hydrocarbon feed is fed into the reactor using a continuous high pressure dispensing pump at the flow rate of 400 gm per hour. The liquid feed is preheated up to 400°C and the feed vapor is being carried into the reactor with help of nitrogen gas. The feed vapor and nitrogen gas enter the reactor wherein feed vapor passes over the catalyst surface, as a result feed starts to decompose and form the solid carbon product. After 8 hours of the process, feed is stopped, and the reactor is allowed to cool down in the nitrogen atmosphere. The solid carbon product is evacuated from the reactor, and the product weighs 1.5 kgs. The theoretical purity of CNT is approximately 93 wt.%

The carbon sample is analyzed by ICAP, XRD, TEM, Raman Spectroscopy, and TGA to get the physico-chemical characteristics of the produced carbon product.

### Example 3: Process for Purification of Carbon Nanotubes (CNTs)

1.5 kg of 93 wt.% carbon purity of CNT produced in Example 2 is charged into the 20-liter stainless steel vessel. The CNT bearing total metal impurities in the concentration range of 0.45 moles. The 100% reagent solution of 0.1M reagent solution is prepared in example 1 is added to 1.5 kg of CNT powder to make CNT slurry. Thus formed CNT slurry is kept under continuous stirring, while the vessel is heated at temperature of 70°C for 12 hours. Thereafter, the vessel is cooled down under stirring by turning off heaters, and slurry solution is being allowed to rest for some time to settle the solid mass at the bottom, and the excess solution is decanted. The wet solid CNT sample is washed with water under vacuum and dried in the oven at 100°C for 12 hours. The obtained CNT material is then crushed into powder and analyzed by ICAP, TGA, XRD, Raman, TEM characterization methods.

### Example 4: Process for production of carbon nanotubes (CNTs) using Co-Mn catalysts

100 gm of 20 wt.% Cobalt and 22 wt.% Manganese supported on MgO catalyst is loaded into the vertical fluidized bed reactor, and reactor is then heated up to the temperature of 650°C under inert atmosphere. After achieving the desired temperature, Hydrogen is passed over the catalyst along with nitrogen gas to reduce the metal oxide catalyst for 2 hours. After finishing the reduction step, hydrogen gas is turned off and nitrogen gas is being continuously passed over the catalyst. The petroleum hydrocarbon feed is fed into the reactor using a continuous high pressure dispensing pump at the flow rate of 400 gm per hour. The liquid feed is preheated up to 400°C and the feed vapor is being carried into the reactor with help of nitrogen gas. The feed vapor and nitrogen gas enter the reactor wherein feed vapor passes over the catalyst surface, as a result feed starts to decompose and form the solid carbon product. After 8 hours of the process, feed is stopped, and the reactor is allowed to cool down in the nitrogen atmosphere. The solid carbon product is evacuated from the reactor, and the product weighs 2.5 kgs. The theoretical purity of CNT is approximately 96 wt.%.

The carbon sample is analyzed by ICAP, XRD, TEM, Raman Spectroscopy, and TGA to get the physico-chemical characteristics of the produced carbon product.

### Example 5: Process for Purification of Carbon Nanotubes (CNTs)

2.5 kg of 96 wt.% carbon purity of CNT produced in Example 4 is charged into the 20-liter stainless steel vessel. The CNT bearing total metal impurities in the concentration range of 0.45 moles. The 100% reagent solution of 0.1M reagent solution is prepared in example 1 is added to 2.5 kg of CNT powder to make CNT slurry. Thus formed CNT slurry is kept under continuous stirring, while the vessel is heated at temperature of 70°C for 12 hours. Further, the vessel is cooled down by turning off the heaters, and slurry solution is being allowed to rest for some time to settle the solid mass at the bottom, and then excess solution is decanted. The wet solid CNT sample is washed with water under vacuum and dried in the oven at 100°C for 12 hours. The obtained CNT material is then crushed into powder and analyzed by ICAP, TGA, XRD, Raman, TEM/SEM characterization methods.

### Example 6: Process for production of carbon nanotubes (CNTs) for Ni-Mn catalyst

100 gm of 20 wt.% Nickel and 22 wt.% Manganese oxide supported on MgO catalyst is loaded into the vertical fluidized bed reactor, and the reactor is then heated up to the temperature of 650°C under inert atmosphere. After achieving the desired temperature, Hydrogen is passed over the catalyst along with nitrogen gas to reduce the metal oxide catalyst for 2 hours. After finishing the reduction step, hydrogen gas is turned off and nitrogen gas is being continuously passed over the catalyst. The petroleum hydrocarbon feed is fed into the reactor using a continuous high pressure dispensing pump at the flow rate of 400 gm per hour. The liquid feed is preheated up to 400°C and the feed vapor is being carried into the reactor with help of nitrogen gas. The feed vapor and nitrogen gas enter the reactor wherein feed vapor passes over the catalyst surface, as a result feed starts to decompose and form the solid carbon product. After 8 hours of the process, feed is stopped, and the reactor is allowed to cool down in the nitrogen atmosphere. The solid carbon product is evacuated from the reactor, and the product is weighed as 2 kgs. The theoretical purity of CNT is approximately 95 wt.%. The resulted CNT is analyzed by ICAP, TGA, XRD, Raman, TEM/SEM characterization methods.

### Example 7: Process for Purification of Carbon Nanotubes (CNTs)

2 kg of 95 wt.% carbon purity of CNT produced in Example 6 is charged into the 20-liter stainless steel vessel. The CNT bearing total metal impurities in the concentration range of 0.45 moles. The 100% reagent solution of 0.1M reagent solution is prepared in example 1 is added to 2 kg of CNT powder to make CNT slurry. Thus formed CNT slurry is kept under continuous stirring, while the vessel is heated at temperature of 70°C for 12 hours. After that, the vessel is cooled down by turn off heaters, and slurry solution is allowed to rest for some time to settle the solid mass at the bottom, and then excess solution is decanted. The decanted solution is analyzed by ICAP for metal analysis. The wet solid CNT sample is washed with water under vacuum and dried in the oven at 100°C for 12 hours. The obtained CNT material is then crushed into powder and analyzed by ICAP, TGA, XRD, Raman, TEM/SEM characterization methods.

**Table 1: Characterization of Carbon nanomaterial samples from Example 2, 3, 4, 5, 6 and 7**

| Example Number | Metal Analysis by ICAP (wt.%) | Raman Spectroscopy (I_{D}/I_{G}) | Tube Diameter (nm) by TEM | Tube Length (µm) by SEM | Surface Area (m²/g) |
|---|---|---|---|---|---|
| 2 | Fe-1.8 wt.% | <0.8 | 10-30 | 2-5 | 105 |
| | Mn-2 wt.% | | | | |
| | Mg-3.3 wt.% | | | | |
| 3 | Fe-0.2 wt.% | <0.8 | 10-30 | 2-5 | 120 |
| | Mn-0.01 wt.% | | | | |
| | Mg-0.01 wt.% | | | | |
| 4 | Co-0.9 wt.% | <0.7 | 10-25 | 5-8 | 117 |
| | Mn-1.3 wt.% | | | | |
| | Mg-1.8 wt.% | | | | |
| 5 | Co-0.1 wt.% | <0.7 | 10-25 | 5-8 | 143 |
| | Mn-0.01 wt.% | | | | |
| | Mg-0.01 wt.% | | | | |
| 6 | Ni-1.5 wt.% | <0.75 | 10-30 | 3-6 | 113 |
| | Mn-1.6 wt.% | | | | |
| | Mg-2.1 wt.% | | | | |
| 7 | Ni-0.15 wt.% | <0.75 | 10-30 | 3-6 | 136 |
| | Mn-0.01 wt.% | | | | |
| | Mg-0.01 wt.% | | | | |

Therefore, it can be seen from Table 1 that Examples 3, 5 and 7 pertaining to purification of CNTs have lower content of metals, when compared to their counter Examples 2, 4 and 6 which are pristine CNT and have higher content of metals.

### TECHNICAL ADVANTAGES OF THE INVENTION:

The advantages of the of the present invention are as follows:
(a) The solid reagent used is environmentally benign, non-mineral acid-based reagent;
(b) The process for purification of carbon nanomaterials operates at low temperature (40 to 90°C), unlike vacuum annealing process, where process temperature is set in the range of 1400 to 2000°C under vacuum which is nearly equivalent to boiling temperature of metals that are present in carbon nanomaterials. Further, vacuum annealing process is highly energy intensive due to requirement of very high temperature;
(c) High purity carbon nanomaterial up to 99.5 wt.% can be achieved without damage to structural integrity of carbon nanomaterials;
(d) No oxygen functional groups are introduced on the carbon nanomaterials; hence electrical properties of carbon nanomaterials are well preserved;
(e) No side products formed unlike in the acid purification process, where part of carbon nanomaterial gets oxidized, hence some functional groups are introduced invariably on defective sites of carbon nanomaterials, along with formation of unwanted carbon soot thus caused the impairment of electrical properties of carbon nanomaterials.
(f) The reagent solution is a water-based solution, hence there is no ecological effect on environment and human health. Furthermore, reagent is safe to handle as it doesn't cause any skin burning while get in contact with skin;
(g) Non-corrosive reagent, so metallurgy of the reactor is protected, while in case of concentrated mineral acid-based purification process, it corrodes the metallurgy of the reactors. Alternatively, glass-based reactors are required to be used, however due to fragility these types of reactors are not suitable to use in industrial scale due to safety reasons; and
(h) The method for removal process of metal impurities from CNMs using ammonium or potassium or sodium persulfate is a novel process without using any harsh acids.

## Claims

1. A non-mineral acid-based reagent solution for purification of a carbon nanomaterial, the solution comprising:
(a) a solid reagent selected from the group consisting of sodium persulphate, potassium persulphate, ammonium persulphate and a mixture thereof; and
(b) deionized water,
wherein the solid reagent is dissolved in the deionized water in a molar ratio of 0.01 to 1; and wherein the carbon nanomaterial comprises metal impurities.

2. The solution as claimed in claim 1, wherein the solid reagent is a non-mineral and an acid-based solid reagent.

3. The solution as claimed in claim 1 or 2, wherein the carbon nanomaterial has a bulk density in a range of 0.01 to 0.2 g/cc, and wherein the carbon nanomaterial is associated with a transitional metal in a form of a metal-carbide with or without heteroatoms, wherein the carbon nanomaterial is encapsulated or intercalated with a carrier metal oxide.

4. The solution as claimed in any one of claims 1 to 3, wherein the carbon nanomaterial is selected from the group consisting of a single walled carbon nanomaterial, a double walled carbon nanomaterial, a triple walled carbon nanomaterial, a thin walled carbon nanomaterial, a multi walled carbon nanomaterial, a carbon nanofiber, and a carbon nano ring.

5. A process for purifying a carbon nanomaterial using a non-mineral acid-based reagent solution, the process comprising:
(a) mixing a solid reagent and deionized water in a molar ratio of 0.01 to 1 to form a reagent solution, wherein the solid reagent is selected from the group consisting of sodium persulphate, potassium persulphate, ammonium persulphate and a mixture thereof;
(b) mixing the reagent solution with the carbon nanomaterial to make a carbon nanomaterial slurry, wherein the carbon nanomaterial comprises metal impurities;
(c) heating the carbon nanomaterial slurry gradually from room temperature to a temperature of 40-100°C;
(d) filtering the carbon nanomaterial slurry under vacuum followed by washing with deionized water to obtain a purified carbon nanomaterial cake; and
(e) drying the purified carbon nanomaterial cake to obtain a purified carbon nanomaterial with a purity of more than 99 wt.%.

6. The process as claimed in claim 5, wherein the carbon nanomaterial slurry is heated for a period of 4-12 hours with stirring.

7. The process as claimed in claim 5 or 6, wherein the carbon nanomaterial slurry is heated at temperature in a range of 70-100°C.

8. The process as claimed in any one of claims 5 to 7, wherein the purified carbon nanomaterial cake is dried in a hot air oven at 120°C for 12 hours.

9. The process as claimed in any one of claims 5 to 8, wherein the carbon nanomaterial is associated with a transitional metal in a form of metal-carbide with or without heteroatoms, wherein the carbon nanomaterial is encapsulated or intercalated with carrier metal oxide.

10. The process as claimed in any one of claims 5 to 9, wherein the carbon nanomaterial is a pristine carbon nanomaterial.

11. The process as claimed in any one of claims 5 to 10, wherein a concentration of the reagent solution is in a range from 1-50 wt.% with respect to a weight of the pristine carbon nanomaterial.

12. The process as claimed in any one of claim 5 to 11, wherein the pristine carbon nanomaterial comprises metal impurities in a range of 3-15 wt.%, and wherein a ratio of the reagent solution to the metal impurities in the pristine carbon nanomaterial is in a range from 0.1 to 1.

13. The process as claimed in any one of claims 5 to 12, wherein the metal impurities are in monometallic, bimetallic, trimetallic, or multimetallic form, and wherein the metal impurities comprise iron, cobalt, nickel, manganese, molybdenum, metals dispersed on carrier materials, whereas the carrier materials comprise magnesium oxide, alumina, silica, or combination thereof.

14. The process as claimed in any one of claims 5 to 13, wherein the purity of the pristine carbon nanomaterial is in a range from 85 to 97 wt.% and the purified carbon nanomaterial has purity of more than 99-99.5 wt.%.

15. The process as claimed in any one of claims 5 to 14, wherein the reagent solution generates persulfate radical formed *in-situ,* and the generated persulphate radical reacts with the metal impurities that are embedded within the carbon nanomaterials.
